# EUROPÄISCHE PATENTSCHRIFT

(11) **EP 1 147 023 B1**
(45) Veröffentlichungstag und Bekanntmachung des Hinweises auf die Patenterteilung: **02.03.2005**
(21) Anmeldenummer: 00989804.0
(22) Anmeldetag: 28.11.2000
(51) Int. Cl.: B60G 7/00, B60G 9/04, B60G 11/27

(54) **ACHSAUFHÄNGUNG FÜR STARRACHSEN VON FAHRZEUGEN**
AXLE SUSPENSION FOR RIGID AXLES OF VEHICLES
SUSPENSION POUR ESSIEUX RIGIDES DE VEHICULES

(30) Priorität: 30.11.1999 DE 19957628
(43) Veröffentlichungstag der Anmeldung: 24.10.2001
(73) Patentinhaber: ZF Lemförder Metallwaren AG, 49441 Lemförde (DE)
(72) Erfinder: BUHL, Reinhard, 49163 Bohmte (DE); BUBLIES, Holger, 49078 Osnabrück (DE)
(86) Internationale Anmeldenummer: PCT/DE2000/004217
(87) Internationale Veröffentlichungsnummer: WO 2001/040001

(56) Entgegenhaltungen:
- EP-A- 0 914 976
- EP-A- 0 949 093
- WO-A-95/28294
- WO-A-99/58354
- DE-A- 4 338 651
- DE-A- 19 521 874
- US-A- 2 607 617
- US-A- 3 406 983
- US-A- 4 007 924
- US-A- 4 034 996
- US-A- 5 203 585

## Beschreibung

Die Erfindung betrifft eine Achsaufhängung für Starrachsen von Fahrzeugen, insbesondere luftgefederten Nutzfahrzeugen nach dem Oberbegriff des Patentanspruches 1.

In der WO 99/58354 A1 wird eine gattungsgemäße Achsaufhängung für Starachsen von Fahrzeugen, insbesondere von luftgefederten Nutzfahrzeugen beschrieben, bei der oberhalb der Fahrzeugachse ein einerseits mit der Fahrzeugachse und andererseits mit dem Fahrzeugaufbau gelenkig verbundener, verwindbarer Vierpunktlenker, der durch jeweils zwei in Fahrzeugquerrichtung beabstandet zueinander befindliche Gelenke mit der Fahrzeugachse und mit dem Fahrzeugaufbau verbunden ist. Auf jeder Fahrzeugseite kommt zur Achsführung wenigstens eine sich in Fahrzeuglängsrichtung erstreckende, die Fahrzeugachse mit dem Fahrzeugaufbau vertikal beweglich verbindende Achsstrebe zum Einsatz, wobei zur Federung zwischen Fahrzeugachse und Fahrzeugaufbau jeweils mindestens eine Federbaueinheit vorhanden ist und die Achsstreben mit der Fahrzeugachse und dem Fahrzeugaufbau jeweils durch ein Molekulargelenk verbunden sind.

Aus der DE 195 21 874 ist eine Achsaufhängung für Starrachsen von Fahrzeugen bekannt, bei der oberhalb der Fahrzeugachse ein einerseits mit der Fahrzeugachse und andererseits mit dem Fahrzeugaufbau gelenkig verbundener, verwindbarer Vierpunktlenker, der durch jeweils zwei in Fahrzeugquerrichtung beabstandet zueinander befindliche Gelenke mit der Fahrzeugachse und mit dem Fahrzeugaufbau verbunden ist, auf jeder Fahrzeugseite zur Achsführung wenigstens eine sich in Fahrzeuglängsrichtung erstreckende, die Fahrzeugachse und den Fahrzeugaufbau vertikal beweglich verbindende Achsstrebe und zur Federung zwischen Fahrzeugachse und Fahrzeugaufbau mindestens eine Federbaueinheit angeordnet ist. Die konstruktive Ausgestaltung derartiger Achsaufhängungen ist prinzipiell einfach, raum- und kostensparend und hat sich in der Praxis durchweg bewährt. Allerdings hat eine derartige gattungsbildende Achsaufhängung wie auch andere aus dem Stand der Technik bekannte Bauarten den Nachteil, dass die Achse fest mit den benachbart von dieser angeordneten Achsstreben verbunden ist. Eine derartige Befestigung führt im Zusammenspiel mit der gesamten Achskonstruktion zu einer kinematischen Überbestimmung der Freiheitsgrade des Fahrzeugfahrwerkes. Dies wiederum führt zu einer in bestimmten Situationen undefinierten Ablauf der kinematischen Vorgänge innerhalb der Achskonstruktion, was sich unter Umständen negativ auf die Fahrwerkabstimmung bzw. die Fahrwerkdynamik in vertikaler und seitlicher Richtung auswirkt.

Darüber hinaus kann die kinematische Überbestimmung bei angetriebenen Achsen zu Antriebswellenvibrationen mit daraus resultierendem erhöhten Antriebswellenverschleiß und hoher Belastung der eingesetzten Achsgehäuse führen.

Die US 5,203,585 offenbart ferner eine Achsaufhängung für Starachsen von Fahrzeugen, bei der auf jeder Fahrzeugseite zur Achsführung wenigstens eine sich in Fahrzeuglängsrichtung erstreckende, die Fahrzeugachse mit dem Fahrzeugaufbau vertikal beweglich verbindende Achsstrebe vorhanden ist, die zur Federung zwischen Fahrzeugachse und Fahrzeugaufbau jeweils mindestens eine Federbaueinheit aufweist. Als Federbaueinheit kann eine Luftfederung zum Einsatz kommen.

Technische Problemstellung der vorliegenden Erfindung ist es, eine gattungsgemäße Achsaufhängung so weiterzuentwickeln, dass die kinematischen Verhältnisse verbessert werden, um die Fahrdynamik zu optimieren, geringere Vibrationen und einen verringerten Verschleiß sowie eine erhöhte Seitensteifigkeit der Achskonstruktion zu erreichen. Darüber hinaus sollen die Anzahl der Einzelteile weiter reduziert, die Reparaturfreundlichkeit erhöht sowie die eingesetzten ungefederten Gewichte weiter reduziert werden.

Diese Problemstellung wird erfindungsgemäß in Zusammenschau mit den gattungsbildenden Merkmalen durch die technische Lehre des Anspruches 1 gelöst. Gemäß der Erfindung soll hierbei die Achsstrebe mit der Fahrzeugachse durch ein Molekulargelenk verbunden sein. Entgegen den aus dem Stand der Technik bekannten Achskonstruktionen ergibt sich durch die gelenkige Lagerung der Fahrzeugachse eine deutlich günstigere Elastizität für das Gesamtsystem Achsaufhängung und eine unter allen Fahrbedingungen eindeutige Zuordnung der kinematischen Verhältnisse, so dass eine Ein- und Ausfederung der Achse sowie das Pendelverhalten nicht durch eine Verzwängung beziehungsweise Verwindung der Fahrzeugachse negativ beeinflusst wird.

Um die kinematischen Verhältnisse der Achsaufhängung an die erfindungsgemäße konstruktive Gestaltung noch besser anpassen zu können, ist es darüber hinaus von Vorteil, wenn die Achsstrebe am Fahrzeugaufbau ebenfalls durch ein Molekulargelenk festgelegt ist. Dieses weitere Molekulargelenk sollte zweckmäßigerweise eine steifere Gelenkcharakteristik aufweisen als das fahrzeugachsseitige Molekulargelenk der Achsstrebe, da hiermit eine kardanische Verwinkelung insbesondere von als Federelement verwendeten Luftbälgen reduziert wird.

Spezielle Ausgestaltungen des Gegenstandes der Erfindung ergeben sich darüber hinaus aus den Merkmalen der Unteransprüche.

Es hat sich insbesondere als besonders vorteilhaft herausgestellt, dass die Achsstreben eine Aufnahme für die eingesetzte Federbaueinheit und/oder einen Stoßdämpfer aufweisen. Die Achsstreben sind zu diesem Zweck an ihrem freien, nicht am Fahrzeugaufbau angelenkten Ende über den Anlenkpunkt für das die Achsstrebe mit der Fahrzeugachse verbindende Ende hinaus verlängert, wobei an diesem Ende die üblicherweise bei Konstruktionen aus dem Stand der Technik gesondert zwischen Fahrzeugachse und Fahrzeugaufbau angeordnete Federbaueinheit aufgenommen ist. Die Aufnahme der Federbaueinheit kann erfindungsgemäß starr oder gelenkig ausgeführt sein, wobei eine gelenkige Verbindung zusätzlich den Verschleiß der Federbaueinheit herabsetzt. Diese Funktionsintegration führt ferner zu einer Reduzierung der Bauteile und somit zu einer Kostensenkung der Gesamtkonstruktion Achsaufhängung auch infolge reduzierter Montagezeit und kleinerer Lagerhaltung. Die Federbaueinheiten lassen sich durch die erfindungsgemäße sehr einfache Achsausführung optimal an die verwendete Achse anbinden, wobei es denkbar ist, die Achsstreben räumlich gesehen in einer V-Form anzuordnen, was zusätzliche Seitenstabilisierung zur Folge hat. Natürlich ist es in diesem Zusammenhang denkbar, die Achsstrebe nicht nur mit jeweils einer Aufnahme für eine Federbaueinheit zu versehen, sondern beispielsweise vier oder mehr Federbaueinheiten, vorzugsweise Luftfederelemente, vorzusehen, um die Fahrzeugachse abzufedern.

Darüber hinaus ist durch die räumliche Kinematik des oberen Vierpunktlenkers und der Molekularlagerung der unteren Achsstrebe mit zwei Gelenken eine saubere Parallelogrammführung beider Bauteile möglich, die wiederum die gesamte Achskinematik positiv beeinflusst und dem Fahrzeughersteller darüber hinaus ideale Einbaubedingungen ermöglicht. Insbesondere ist durch die ideale Trapezführung gewährleistet, dass der Gelenkwellenverschleiß so gering wie möglich gehalten wird.

Im folgenden werden Ausführungsbeispiele des Gegenstandes der Erfindung anhand der beigefügten Zeichnungen näher erläutert. Es zeigen:
- Figur 1:: eine perspektivische Ansicht eines ersten Ausführungsbeispieles der erfindungsgemäßen Achsaufhängung von schräg vorne in Fahrzeugrichtung gesehen,
- Figur 2:: eine perspektivische Ansicht von schräg hinten der Achsaufhängung der Figur 1,
- Figur 3:: eine Draufsicht auf ein weiteres Ausführungsbeispiel der erfindungsgemäßen Achsaufhängung,
- Figur 4:: ein für die erfindungsgemäße Achsaufhängung verwendetes Molekulargelenk in Schnittdarstellung,
- Figur 5:: eine perspektivische Ansicht eines weiteren Ausführungsbeispieles der erfindungsgemäßen Achsaufhängung von schräg vorn in Fahrzeugrichtung gesehen und

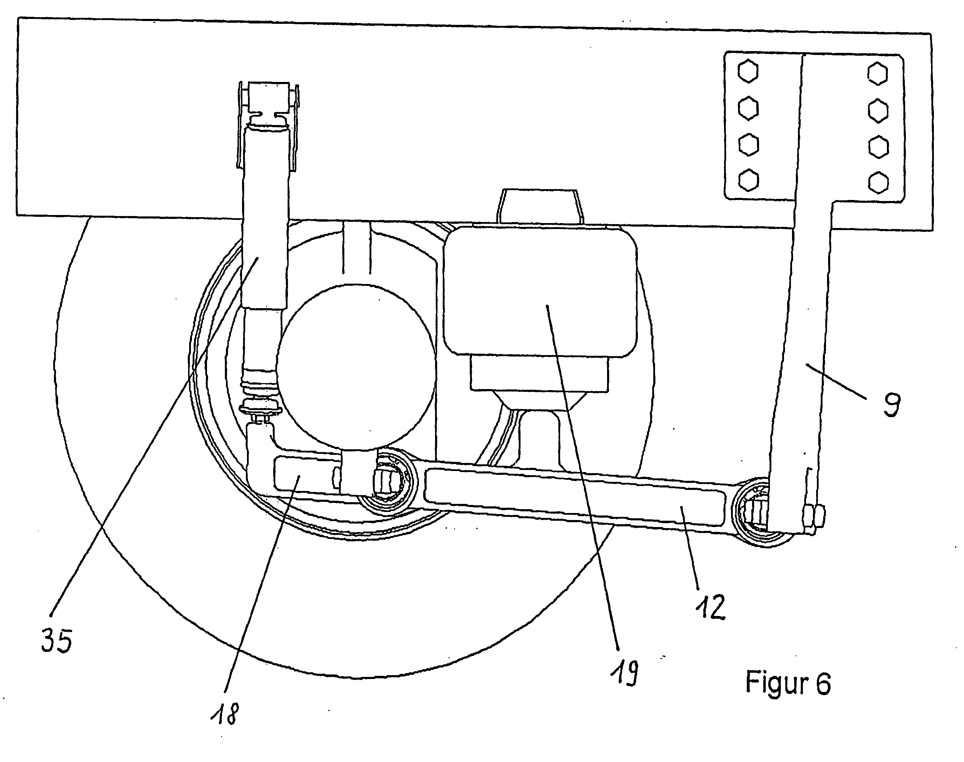

- Figur 6:: die Ansicht entsprechend der Pfeilrichtung VI in Figur 5, jedoch ohne das Fahrzeugrad.

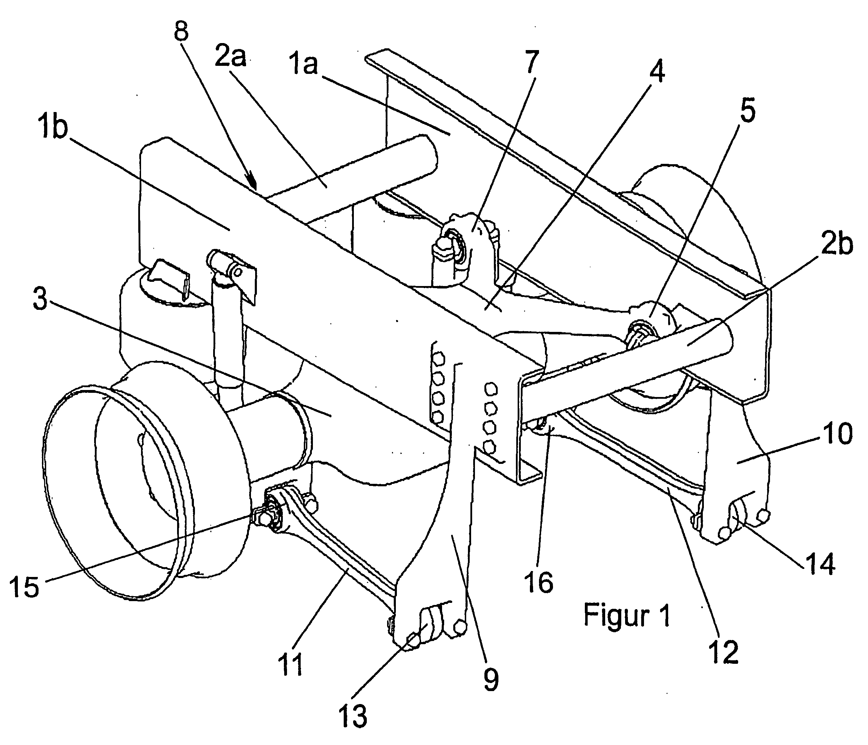

In der Figur 1 ist die erfindungsgemäße Achsaufhängung an einem mit Längsträgern 1a, 1b versehenen, hier nicht näher gezeigten Nutzfahrzeugfahrgestell dargestellt. Die Längsträger 1a und 1b sind seitlich beabstandet zueinander angeordnet und durch die Querträger 2a, 2b miteinander fest verbunden. Unterhalb der Längsträger 1a und 1b ist die Fahrzeugachse 3 angeordnet, welche mit den Längsträgern 1a, 1b über einen Vierpunktlenker 4 verbunden ist. Der Vierpunktlenker 4 weist insgesamt vier Gelenke 5, 6, 7 und 8 auf, wobei jeweils zwei Gelenke 5, 6, am Fahrzeugrahmen und zwei Gelenke 7, 8 an der Fahrzeugachse befestigt sind. Die an Fahrzeugachse und Karosserie festgelegten Gelenke sind hierbei in Fahrzeugquerrichtung beabstandet zueinander angeordnet.

Aus der Figur 1 ist darüber hinaus ersichtlich, daß an jedem der beiden Längsträger 1a und 1b jeweils ein Seitenbracket 9 bzw. 10 befestigt ist, an dessen unterem freien Ende jeweils eine Achsstrebe 11 bzw. 12 mittels jeweils eines Molekulargelenkes 13, 14 angelenkt ist.

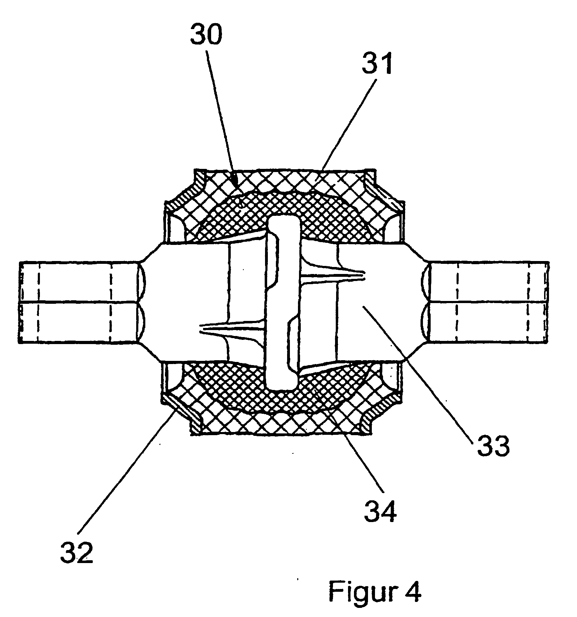

Bei einem Molekulargelenk handelt es sich prinzipiell um ein Gelenk, wie es als Kugelgelenk beispielhaft in der Figur 4 dargestellt ist. Das Molekulargelenk besteht hierbei aus einer innen liegenden Gelenkkugel 30, einem die Gelenkkugel umschließenden Gehäuse 32 sowie einem zwischen Gelenkkugel 30 und Gehäuse 32 angeordneten Elastomer 31. Bei dem Ausführungsbeispiel der Figur 4 ist die Gelenkkugel 30 zweiteilig ausgeführt, wobei sie aus einer inneren metallischen Gelenkachse 33 und einer daran angeformten Außenkugel 34 aus Elastomer besteht. Andere Ausführung eines Molekulargelenkes können die Ausführung der Gelenkkugel 30 insgesamt aus Metall vorsehen oder anstelle einer Kugel ein zylindrisches Innenteil aufweisen. Derartige Molekulargelenke können durch die Auswahl des zwischen Gelenkkugel 30 und Gehäuse 32 angeordneten Elastomers den auf das Gelenk einwirkenden Belastungen entsprechend angepasst werden. Darüberhinaus können innerhalb des Elastomer und/oder des Gehäuses bzw. am Innenteil des Gelenkes zumindest bereichsweise Ausnehmungen vorgesehen sein, die eine gezielte Beeinflussung der Gelenkcharakteristik bewirken. So können Molekulargelenke beispielsweise in einer Richtung eine geringere Dämpfung und in wenigstens einer versetzt hierzu gelegenen Richtung eine entsprechend größere Dämpfung aufweisen.

Die an den Seitenbrackets 9, 10 mittels der Molekulargelenke 13, 14 angelenkten Achsstreben 11, 12 sind im wesentlichen in horizontaler Richtung angeordnet und an ihrem den Molekulargelenken 13, 14 abgewandten Ende erfindungsgemäß mit der Achse 3 jeweils über ein weiteres Molekulargelenk 15, 16 verbunden. Die Molekulargelenke 15, 16 weisen prinzipiell den oben beschriebenen Aufbau auf und ermöglichen sowohl die Aufnahme von Längs- als auch Vertikalkräften und Verwinkelungen (Kardanik), die durch die Bewegungen der Achse hervorgerufen in das Fahrverk eingeleitet werden. Durch die Verwendung der Molekulargelenke wird eine Überbestimmung der kinematischen Freiheitsgrade verhindert, so daß eine optimalere Vorwärtsabstimmung im Hinblick auf die Fahrwerksdynamik in vertikaler und seitlicher Richtung herbeigeführt werden kann.

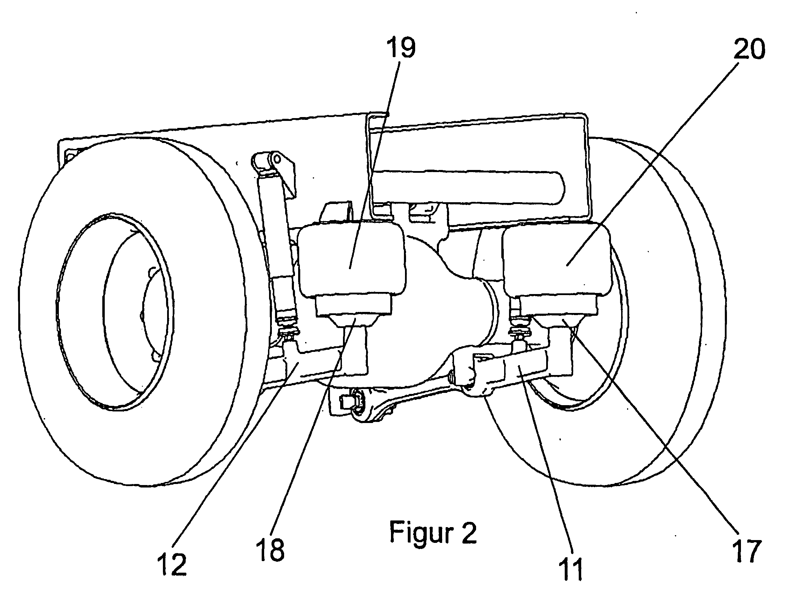

Aus der Ansicht der Figur 2 ist ersichtlich, daß die Achsstreben 11, 12 über den Anlenkpunkt für die Molekulargelenke 15 und 16 hinaus verlängert sind und an ihrem freien Ende jeweils eine Aufnahme 17 bzw. 18 für eine Federbaueinheit 19, 20 aufweisen. Ferner besteht eine Verbindung zwischen den Achsstreben 11, 12 und dem Fahrzeugaufbau 1a, 1b über je einen Stoßdämpfer 35, 36. Die Verlängerung der Achsstreben 11 und 12 mit der Integration der Aufnahmen 17 und 18 fuhrt zu einer Reduzierung der üblicherweise bei herkömmlichen Achskonstruktionen verwendeten Bauteile und verringert somit Lagerhaltung und Montagezeiten für die erfindungsgemäße Achskonstruktion.

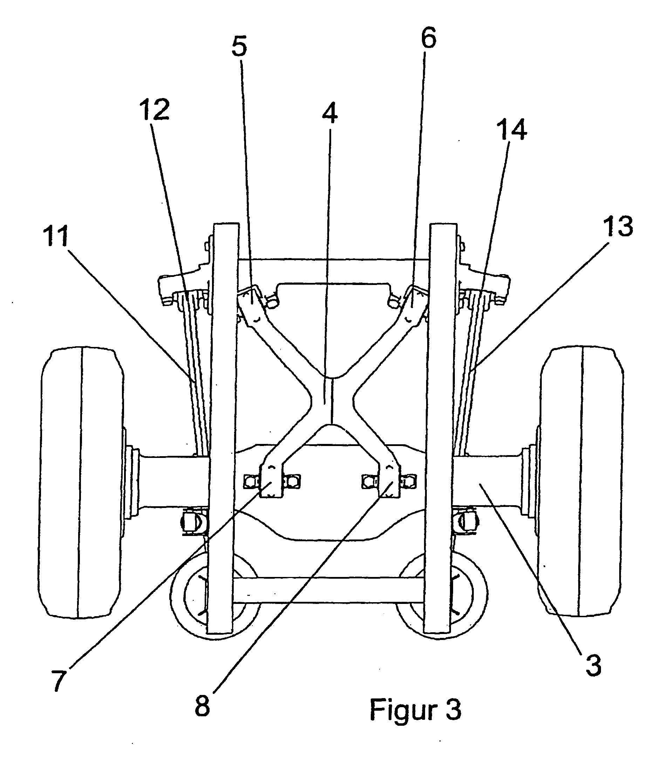

Aus der Draufsicht der Figur 3 eines weiteren Ausführungsbeispieles der erfindungsgemäßen Achskonstruktion ist ersichtlich, daß hierbei die Achsstreben 11 bzw. 12 von ihrer vorderen Anlenkung mittels der Molekulargelenke 13 und 14 zum Fahrzeugende hin eine in der Draufsicht gesehen zur Fahrzeugmitte hin verlaufende Richtung aufweisen können. Darüber hinaus kann der Draufsicht die Lage des Vierpunktlenkers 4 sowie seiner Anlenkpunkte an der Karosserie bzw. der Achse entnommen werden.

Natürlich ist es möglich, die erfindungsgemäße Anlenkung der Achse an die Achsstreben auch für solche Konstruktionen zu verwenden, bei denen statt der dargestellten zwei Federbaueinheiten drei, vier oder mehr derartige Federelemente zum Einsatz kommen, beziehungsweise bei denen die Federbaueinheiten 19, 20 in Fahrzeugrichtung gesehen vor oder hinter der Fahrzeugachse 3 angeordnet sind.

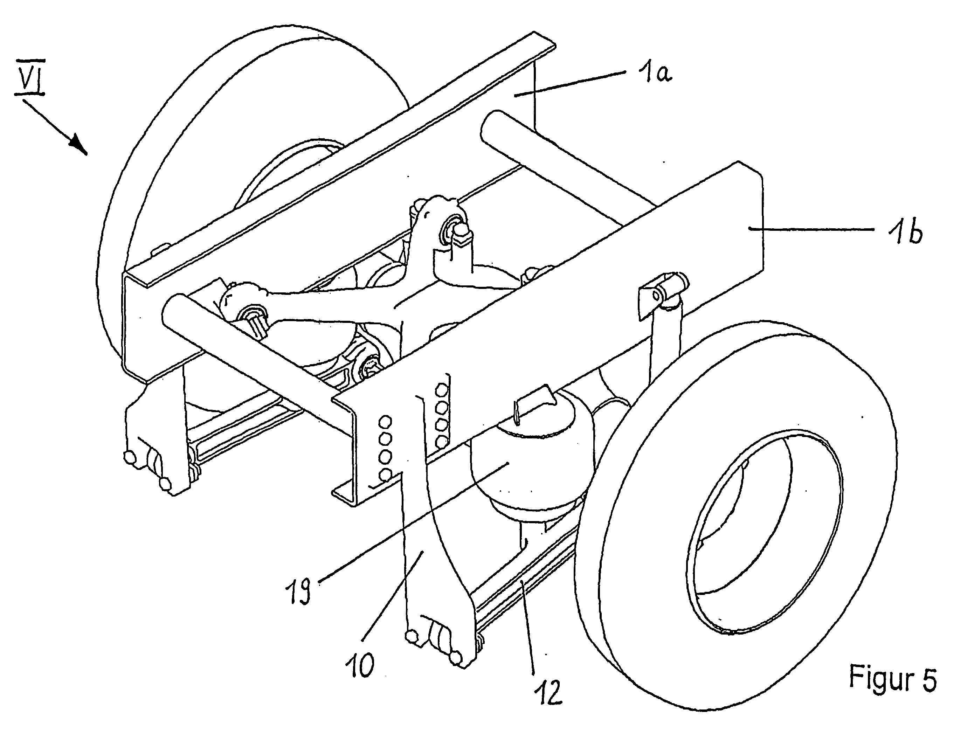

Eine Ausführung mit vor der Fahrzeugachse 3 angebrachten Federbaueinheiten 19, 20 ist in der Figur 5 gezeigt. Bei dieser Ausführung wird der Stoßdämpfer 35 (36) an der Aufnahme 18 (17) befestigt und die Federbaueinheit 19 (20) mit einem Luftbalg ist auf der Achsstrebe 12 (11) montiert.

### Bezugszeichenliste:

- 1a: Längsträger
- 1b: Längsträger
- 2a: Querträger
- 2b: Querträger
- 3: Fahrzeugachse
- 4: Vierpunktlenker
- 5: Gelenk
- 6: Gelenk
- 7: Gelenk
- 8: Gelenk
- 9: Seitenbracket
- 10: Seitenbracket
- 11: Achsstrebe
- 12: Achsstrebe
- 13: Molekulargelenk
- 14: Molekulargelenk
- 15: Molekulargelenk
- 16: Molekulargelenk
- 17: Aufnahme
- 18: Aufnahme
- 19: Federbaueinheit
- 20: Federbaueinheit
- 30: Gelenkkugel
- 31: Elastomer
- 32: Gehäuse
- 33: Gelenkachse
- 34: Außenkugel
- 35: Stoßdämpfer
- 36: Stoßdämpfer

## Patentansprüche

1. Achsaufhängung für Starachsen von Fahrzeugen, insbesondere von luftgefederten Nutzfahrzeugen, bei der
- oberhalb der Fahrzeugachse (3) ein einerseits mit der Fahrzeugachse (3) und andererseits mit dem Fahrzeugaufbau (1a, 1b) gelenkig verbundener, verwindbarer Vierpunktlenker (4), der durch jeweils zwei in Fahrzeugquerrichtung beabstandet zueinander befindliche Gelenke (5, 6, 7, 8) mit der Fahrzeugachse (3) und mit dem Fahrzeugaufbau (1a, 1b) verbunden ist,
- auf jeder Fahrzeugseite zur Achsführung wenigstens eine sich in Fahrzeuglängsrichtung erstreckende, die Fahrzeugachse (3) mit dem Fahrzeugaufbau (1a, 1b) vertikal beweglich verbindende Achsstrebe (11, 12) und
- zur Federung zwischen Fahrzeugachse (3) und Fahrzeugaufbau (1a, 1b) jeweils mindestens eine Federbaueinheit (19, 20) angeordnet ist, wobei die Achsstreben (11, 12) mit der Fahrzeugachse (3) und dem Fahrzeugaufbau (1a, 1b) jeweils durch ein Molekulargelenk (13, 14, 15, 16) verbunden sind,
**dadurch gekennzeichnet, dass**
das fahrzeugaufbauseitige Molekulargelenk (13, 14) der Achsstrebe (11, 12) eine steifere Gelenkcharakteristik aufweist als die fahrzeugachsseitigen Molekulargelenke (15,16) der Achsstrebe (11, 12).

2. Achsaufhängung nach Anspruch 1,
**dadurch gekennzeichnet, dass**
die Achsstreben (11, 12) eine Aufnahme (17, 18) für die Federbaueinheiten (19, 20) oder Stoßdämpfer (35, 36) aufweisen.

3. Achsaufhängung nach Anspruch 2,
**dadurch gekennzeichnet, dass**
die Aufnahmen (17, 18) für die Federbaueinheiten (19, 20) oder die Stoßdämpfer (35, 36) als Gelenke gestaltet sind.

4. Achsaufhängung nach Anspruch 3,
**dadurch gekennzeichnet, dass**
die Gelenke Kugelgelenke sind.

5. Achsaufhängung nach einem der vorgenannten Ansprüche,
**dadurch gekennzeichnet, dass**
die Achsstreben (11, 12) jeweils zusätzlich über mindestens einen Stoßdämfer (35, 36) mit dem Fahrzeugaufbau (1a, 1b) verbunden sind.

6. Achsaufhängung nach einem der vorgenannten Ansprüche,
**dadurch gekennzeichnet, dass**
die Federbaueinheit (19, 20) vor oder hinter der Fahrzeugachse (3) angeordnet ist.

7. Achsaufhängung nach einem der Ansprüche 1 bis 5,
**dadurch gekennzeichnet, dass**
vor und hinter der Fahrzeugachse (3) jeweils eine Federbaueinheit (19, 20) angeordnet ist.

## Claims

1. Axle suspension for rigid axles of vehicles, in particular of pneumatically cushioned commercial vehicles, in which
- above the vehicle axle (3) a flexible four-point control arm (4) connected in an articulated manner on the one hand to the vehicle axle (3) and on the other hand to the vehicle body (1a, 1b) is disposed, which is connected to the vehicle axle (3) and to the vehicle body (1a, 1b) by in each case two joints (5, 6, 7, 8) mutually spaced apart in vehicle transverse direction,
- at each vehicle side for axle guidance at least one axle tie rod (11, 12) is disposed, which extends in vehicle longitudinal direction and connects the vehicle axle (3) in a vertically movable manner to the vehicle body (1a, 1b), and
- for cushioning between vehicle axle (3) and vehicle body (1a, 1b) in each case at least one spring unit is disposed, wherein the axle tie rods (11, 12) are connected to the vehicle axle (3) and the vehicle body (1a, 1b) in each case by a molecular joint (13, 14, 15, 16),
**characterized in that**
the vehicle-body-side molecular joint (13, 14) of the axle tie rod (11, 12) has a stiffer joint characteristic than the vehicle-axle-side molecular joints (15, 16) of the axle tie rod (11, 12).

2. Axle suspension according to claim 1,
**characterized in that**
the axle tie rods (11, 12) have a receiver (17, 18) for the spring units (19, 20) or shock absorbers (35, 36).

3. Axle suspension according to claim 2,
**characterized in that**
the receivers (17, 18) for the spring units (19, 20) or the shock absorbers (35, 36) are fashioned as joints.

4. Axle suspension according to claim 3,
**characterized in that**
the joints are ball joints.

5. Axle suspension according to one of the preceding claims,
**characterized in that**
the axle tie rods (11, 12) are each additionally connected by at least one shock absorber (35, 36) to the vehicle body (1a, 1b).

6. Axle suspension according to one of the preceding claims,
**characterized in that**
the spring unit (19, 20) is disposed in front of or behind the vehicle axle (3).

7. Axle suspension according to one of claims 1 to 5,
**characterized in that**
disposed in front of and behind the vehicle axle (3) there is in each case a spring unit (19, 20)

## Revendications

1. Suspension d'essieu pour essieux rigides de véhicules, en particulier de véhicules utilitaires à suspension pneumatique, dans laquelle
- au-dessus de l'essieu (3) du véhicule est prévu un bras oscillant à quatre points (4) à torsion, relié de manière articulée d'une part à l'essieu (3) du véhicule et d'autre part à la carrosserie (1a, 1b) du véhicule, qui est relié respectivement par deux articulations (5, 6, 7, 8) se trouvant à distance l'une de l'autre dans la direction transversale du véhicule, à l'essieu (3) du véhicule et à la carrosserie (1a, 1b) du véhicule,
- sur chaque côté du véhicule, pour le guidage de l'essieu, au moins une jambe de force d'essieu (11, 12) s'étendant dans la direction longitudinale du véhicule et reliant de manière mobile verticalement l'essieu (3) du véhicule à la carrosserie (1a, 1b) du véhicule, et
- pour la suspension il est disposé entre l'essieu (3) du véhicule et la carrosserie (1a, 1b) du véhicule respectivement au moins une unité de construction à ressort (19, 20), les jambes de force d'essieu (11, 12) étant reliées à l'essieu (3) du véhicule et la carrosserie (1a, 1b) du véhicule, chacune par une articulation moléculaire (13, 14, 15, 16),
**caractérisée en ce que**
l'articulation moléculaire (13, 14) côté carrosserie du véhicule de la jambe de force d'essieu (11, 12) présente une caractéristique d'articulation plus rigide que les articulations moléculaires (15, 16) côté essieu du véhicule, de la jambe de force d'essieu (11, 12).

2. Suspension d'essieu selon la revendication 1,
**caractérisée en ce que**
les jambes de force d'essieu (11, 12) présentent un logement (17, 18) pour les unités de construction à ressort (19, 20) ou amortisseurs (35, 36).

3. Suspension d'essieu selon la revendication 2,
**caractérisée en ce que**
les logements (17, 18) pour les unités de construction à ressort (19, 20) ou les amortisseurs (35, 36) sont réalisés en tant qu'articulations.

4. Suspension d'essieu selon la revendication 3,
**caractérisée en ce que**
les articulations sont des joints sphériques.

5. Suspension d'essieu selon l'une des revendications précédentes,
**caractérisée en ce que**
les jambes de force d'essieu (11, 12) sont en outre reliées chacune à la carrosserie (1a, 1b) du véhicule par au moins un amortisseur (35, 36).

6. Suspension d'essieu selon l'une des revendications précédentes,
**caractérisée en ce que**
l'unité de construction à ressort (19, 20) est disposée devant ou derrière l'essieu (3) du véhicule.

7. Suspension d'essieu selon l'une des revendications 1 à 5,
**caractérisée en ce que**
une unité de construction à ressort (19, 20) est disposée respectivement devant et derrière l'essieu (3) du véhicule.
